# EUROPEAN PATENT APPLICATION

(11) **EP 1 146 586 A2**
(43) Date of publication of application: **17.10.2001**
(21) Application number: 01303366.7
(22) Date of filing: 10.04.2001
(51) Int. Cl.: H01M 10/40

(54) **Non-aqueous electrolyte secondary battery**

(30) Priority: 11.04.2000 JP 2000109268
(71) Applicant: MATSUSHITA ELECTRIC INDUSTRIAL CO., LTD., Kadoma-shi, Osaka 571-8501 (JP)
(72) Inventor: Hatazaki, Makino, Osaka-shi, Osaka 535-0002 (JP); Iwamoto, Kazuya, Sakai-shi, Osaka 593-8304 (JP); Sonoda, Kumiko, Hirakata-shi, Osaka 573-0036 (JP); Yoshizawa, Hiroshi, Hirakata-shi, Osaka 573-0151 (JP)
(74) Representative: Nachshen, Neil Jacob

(57) **Abstract**

A non-aqueous electrolyte secondary battery having excellent charge/discharge characteristics and a long cycle life, and generating a smaller amount of gas during storage than conventional batteries, comprising a positive electrode; a negative electrode; and a non-aqueous electrolyte comprising a non-aqueous solvent and a solute dissolved therein. This improvement is achieved by adding to the non-aqueous electrolyte a surface active agent represented by the general formula (1):

X-CₙF₂ₙ-Y-(CH₂-CH₂)ₘ-Z

where X is H or F, Y is -CONH- or -SO₂NR- in which R is an alkyl group, Z is -OH, -CH₃, -PO₃W₂ or -SO₃W in which W is an alkali metal, 4≦n≦10, and 20≦m≦100.

## Description

### BACKGROUND OF THE INVENTION

The present invention relates to a non-aqueous electrolyte secondary battery having excellent charge/discharge characteristics as well as a long cycle life, and generating a smaller amount of gas during storage than conventional batteries.

Non-aqueous electrolyte secondary batteries such as lithium secondary batteries, which are used in recent years as a principal power source for mobile communication equipment and portable electronic appliances, have a high electromotive force and a high energy density.

On the other hand, these batteries have the problem that, since the interfacial free energy between the electrode and the non-aqueous electrolyte is high, lithium ions do not diffuse readily in the interface. As a consequence, the discharge characteristics of the batteries at a large electric current are low. For this reason, it is difficult to use non-aqueous electrolyte secondary batteries for appliances which require a large electric current. Also, due to the high interfacial free energy, the electrode reaction tends to be uneven. Partial overcharge reaction would lead to generation of gas in the batteries.

For such a reason, surface active agents are added in the positive electrode and/or the negative electrode in order to reduce the interfacial free energy (Japanese Laid-Open Patent Publications No. Sho 63-236258 and No. Hei 5-335018). However, addition of surface active agents decreases the energy density of the electrode as well as the charge/discharge characteristics. Also, with the same intention, there is proposed addition of a nonionic surface active agent having a hydrophile-lipophile balance value (HLB value) of 15 or less to the non-aqueous solvent (Japanese Laid-Open Patent Publication No. Hei 9-161844). For example, polyoxyethylene phenyl ether is added to the non-aqueous solvent in the range of 1 × 10⁻⁵ to 3 × 10⁻¹ mol/l. With this, the high rate discharging property of the battery can be improved without greatly reducing the energy density of the electrode. In this case, however, the amount of gas generated increases, and also the cycle life of the battery is rendered unsatisfactory.

### BRIEF SUMMARY OF THE INVENTION

The present invention addresses the problems as described above by decreasing the interfacial free energy between the non-aqueous electrolyte and the electrode thereby to facilitate the diffusion of ions in the interface. To be specific, the present invention provides a non-aqueous electrolyte secondary battery having a high energy density, which is excellent in charge/discharge characteristics such as high rate discharging property as well as cycle life, and generating smaller amount of gas during storage than conventional batteries. This battery exhibits favorable discharge characteristics at a large electric current and it is suitable for equipments requiring a large electric current.

The present invention relates to a non-aqueous electrolyte secondary battery comprising a positive electrode; a negative electrode; a non-aqueous electrolyte comprising a non-aqueous solvent and a solute dissolved therein, wherein the non-aqueous electrolyte is added with a surface active agent represented by the general formula (1):

X-CₙF₂ₙ-Y-(CH₂-CH₂)ₘ-Z

where X is H or F, Y is -CONH- or -SO₂NR- in which R is an alkyl group, Z is -OH, -CH₃, -PO₃W₂ or -SO₃W in which W is an alkali metal, 4≦n≦10, and 20≦m≦100.

The amount of the surface active agent represented by the general formula (1) is preferably 0.001 to 5.0 parts by weight per 100 parts by weight of the non-aqueous electrolyte.

It should be mentioned that, although addition of the surface active agent as above to an alkaline aqueous solution in a zinc alkaline battery improves the corrosion resistance of an zinc alloy, this fact has no relation with the problem of the interfacial free energy between the electrode and the non-aqueous electrolyte (Japanese Laid-Open Patent Publication No. Hei 4-322060).

It is preferable that the above negative electrode comprises a carbon material, the above positive electrode comprises a metal oxide containing lithium, and the above non-aqueous solvent comprises at least one selected from the group consisting of ethylene carbonate, propylene carbonate, ethylmethyl carbonate, diethyl carbonate, dimethyl carbonate, *γ*-butyrolactone, *γ*-valerolactone, α-acetyl-*γ*-butyrolactone, α-methyl-*γ*-butyrolactone, methyl acetate, ethyl acetate, methyl propionate, ethyl butylate, butyl acetate, n-propyl acetate, iso-butyl propionate and benzyl acetate.

In the present invention, it is effective that 80% by volume or more of the non-aqueous solvent consists of at least one selected from the group consisting of propylene carbonate and γ-butyrolactone.

It is preferable that at least one selected from the group consisting of a carbonic acid ester type additive and a sulfur compound type additive is further added to the above non-aqueous electrolyte. The amount of such an additive is preferably 0.1 to 10 parts by weight per 100 parts by weight of the non-aqueous electrolyte.

Preferred carbonic acid ester type additive is at least one selected from the group consisting of vinylene carbonate, phenylethylene carbonate, phenylvinylene carbonate, diphenylvinylene carbonate, trifluoropropylene carbonate, chloroethylene carbonate, methoxypropylene carbonate, vinylethylene carbonate, catechol carbonate, tetrahydrofuran carbonate, diphenyl carbonate and diethyl dicarbonate.

Preferred sulfur compound type additive is at least one selected from the group consisting of ethylene sulfide, ethylene trithiocarbonate, vinylene trithiocarbonate, catechol sulfide, tetrahydrofuran sulfide, sulfolane, 3-methylsulfolane, sulfolene, propanesultone and 1,4-butanesultone.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWING

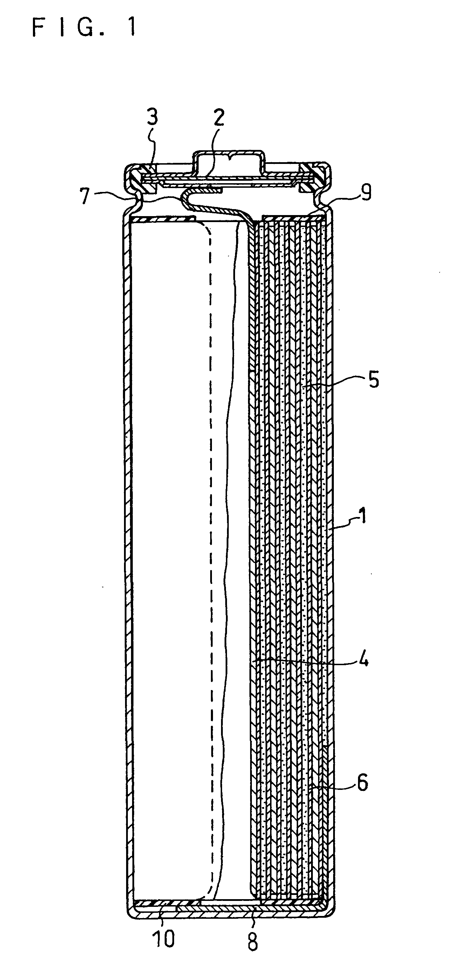

FIG. 1 is a cross sectional view of a cylindrical battery used in examples of the present invention.

### DETAILED DESCRIPTION OF THE PREFERRED EMBODIMENTS

In the non-aqueous electrolyte secondary battery of the present invention, in order to decrease the interfacial free energy between the non-aqueous electrolyte and the electrode to readily diffuse ions such as lithium ions in the interface, a surface active agent is added to the non-aqueous electrolyte, which surface active agent is represented by the general formula (1):

X-CₙF₂ₙ-Y-(CH₂-CH₂)ₘ-Z

where X is H or F, Y is -CONH- or -SO₂NR- in which R is an alkyl group, Z is -OH, -CH₃, -PO₃W₂ or -SO₃W in which W is an alkali metal, 4≦n≦10, and 20≦m≦100.

In the general formula (1), X is preferably F. Also, Y is preferably -SO₂NR-. Further, Z is preferably -SO₃W.

Hence, especially preferred is a surface active agent represented by the general formula (2):

F-CₙF₂ₙ-SO₂NR-(CH₂-CH₂)ₘ-SO₃W

Examples of R in -SO₂NR- are an n-propyl group, an isopropyl group and the like, and an n-propyl group is preferred. Examples of W in -SO₃W are Li, Na, K and the like, and Li is preferred.

Thus, more preferable is a surface active agent represented by the general formula (3):

F-CₙF₂ₙ-SO₂N(C₃H₇)-(CH₂-CH₂)ₘ-SO₃Li

In the general formula (1), n is preferably 7 to 10, and more preferably 8. Also, m is preferably 20 to 30, and more preferably 20.

As the positive electrode active material for the battery of the present invention, it is preferable to use LiCoO₂, LiNiO₂, LiMn₂O₄ and the like. In this case, the positive electrode active material tends to be hydrophilic. Also, as the negative electrode active material for the battery of the present invention, it is preferable to use a carbon material such as graphite. In this case, the negative electrode active material tends to be hydrophobic. As a consequence, in order to decrease the interfacial free energy on the both electrode plates to bring the electrode plates and the non-aqueous electrolyte in contact sufficiently, it is effective to add a surface active agent having both a hydrophilic group and a hydrophobic group.

Also, in the positive electrode, a hydrophilic active material such as LiCoO₂ and a hydrophobic conductive agent such as acetylene black and graphite are present together. As a consequence, even if a surface active agent having only either one of the hydrophobic group and the hydrophilic group is added to the non-aqueous electrolyte, the effect of increasing the permeability of the non-aqueous electrolyte into the positive electrode is unsatisfactory.

The surface active agent of the general formula (1) has both hydrophilicity and hydrophobicity since it has -CₙF₂ₙ-, which is hydrophobic, and -Z, which is hydrophilic. As a consequence, addition of this surface active agent enables the non-aqueous electrolyte to permeate efficiently into the both electrode plates. Also, it is considered that, since properties of respective X, Y and -(CH₂-CH₂)ₘ-contribute to the properties of both of the hydrophilic group and the hydrophobic group, an optimal balance between the hydrophilicity and the hydrophobicity is realized for decreasing the interfacial free energy.

The amount of the surface active agent of the general formula (1) is preferably 0.001 to 5 parts by weight, more preferably 0.05 to 0.5 part by weight per 100 parts by weight of the non-aqueous electrolyte. If the amount is less than 0.001 part by weight, the effect of decreasing the interfacial free energy between the electrode and the non-aqueous electrolyte is decreased. On the other hand, if the amount is more than 5 parts by weight, the ionic conductivity of the electrolyte tends to decline.

The non-aqueous electrolyte for use in the present invention is composed of a non-aqueous solvent and a solute dissolved in the solvent.

Preferred components for use in the non-aqueous solvent include ethylene carbonate, propylene carbonate, ethylmethyl carbonate, diethyl carbonate, dimethyl carbonate, γ-butyrolactone, γ-valerolactone, α-acetyl-γ-butyrolactone, α-methyl-γ-butyrolactone, methyl acetate, ethyl acetate, methyl propionate, ethyl butylate, butyl acetate, n-propyl acetate, iso-butyl propionate and benzyl acetate. These components may be used singly or in combination of two or more of them. Among them, ethylene carbonate, propylene carbonate, ethylmethyl carbonate and *γ* -butyrolactone are preferred.

However, aliphatic carboxylic acid ester is preferably 30% by weight or less and more preferably 20% by weight or less of the entire non-aqueous solvent.

Also, from the viewpoint of achieving a non-aqueous electrolyte having a high electrical conductivity, 80% by volume or more of the entire non-aqueous solvent consists of at least one selected from the group consisting of propylene carbonate (dielectric constant: 64.9) and γ-butyrolactone (dielectric constant: 39.1). Usually, the non-aqueous electrolyte comprising these solvents does not readily permeate into the electrodes and the separators. However, no such inconvenience occurs if the surface active agent of the general formula (1) is added to the non-aqueous electrolyte. Hence, according to the present invention, there can be obtained a battery containing a non-aqueous electrolyte comprising a non-aqueous solvent having a large dielectric constant so that the battery has better electric characteristics than conventional ones.

As the non-aqueous solvent for use in the present invention, those having compositions as described in the following are preferred, for example.

### Non-aqueous solvent 1

A non-aqueous solvent comprising 5 to 50% by volume of ethylene carbonate and 50 to 95% by volume of ethylmethyl carbonate.

### Non-aqueous solvent 2

A non-aqueous solvent comprising 50 to 100% by volume of γ-butyrolactone and 0 to 50% by volume of propylene carbonate.

### Non-aqueous solvent 3

A non-aqueous solvent comprising 50 to 100% by volume of propylene carbonate and 0 to 50% by volume of γ-butyrolactone.

When the non-aqueous electrolyte is mainly composed of γ-butyrolactone or propylene carbonate, it is effective to add a carbonic acid ester other than propylene carbonate in order to decrease viscosity or to enlarge the dielectric constant of the non-aqueous electrolyte.

Preferred solutes to be dissolved in the non-aqueous solvent include LiClO₄, LiBF₄, LiPF₆, LiAlCl₄, LiSbF₆, LiSCN, LiCF₃SO₃, LiCF₃CO₂, Li(CF₃SO₂)₂, LiAsF₆, LiN(CF₃SO₂)₂, LiB₁₀Cl₁₀, lower aliphatic carboxylic lithium, LiCl, LiBr, Lil, lithium chloroborate, lithium tetraphenylborate. These solutes may be used singly or in combination of two or more of them. Among them, it is preferable to use LiPF₆ from the viewpoint of achieving a non-aqueous electrolyte having a high ionic conductivity due to a high oxidative decomposition potential of the solute.

In the non-aqueous electrolyte, the concentration of the solute is not specifically restricted; however, it is preferable in the range of 0.2 to 2 mol/l, and more preferably 0.5 to 1.5 mol/l.

The non-aqueous electrolyte is usually used as retained in separators comprising a porous polymer material or a nonwoven cloth of a resin fiber or a glass fiber. Also, a polymer electrolyte in the state of a gel can be used, which is obtained by making a given polymer retain the non-aqueous electrolyte.

It is preferable to add also to the non-aqueous electrolyte at least one selected from the group consisting a carbonic acid ester type additive and a sulfur compound type additive, because such additives have an effect of reducing generation of gas.

The carbonic acid ester type additive has an effect of decreasing gases such as H₂ and CH₄ which generate on the negative electrode, because such an additive forms a coating film on the surface of the negative electrode.

The sulfur compound type additive has an effect of decreasing gases such as CO₂ which generate in the positive electrode, because such an additive forms a coating film on the surface of the positive electrode.

The use of the surface active agent of the general formula (1) together with these additives allows these additives to spread uniformly on the surface of the negative electrode and the positive electrode. As a consequence, generation of gases in each electrode plate is further suppressed.

The carbonic acid ester type additives include vinylene carbonate, phenylethylene carbonate, phenylvinylene carbonate, diphenylvinylene carbonate, trifluoropropylene carbonate, chloroethylene carbonate, methoxypropylene carbonate, vinylethylene carbonate, catechol carbonate, tetrahydrofuran carbonate, diphenyl carbonate and diethyl dicarbonate. These additives may be used singly or in combination of two or more of them. Among them, vinylene carbonate and phenylvinylene carbonate are preferred because they are compatible with the aforementioned surface active agent and they have a remarkable effect of reducing the gas generating on the surface of the negative electrode. Vinylene carbonate is particularly preferred.

The sulfur compound type additives include ethylene sulfide, ethylene trithiocarbonate, vinylene trithiocarbonate, catechol sulfide, tetrahydrofuran sulfide, sulfolane, 3-methylsulfolane, sulfolene, propanesultone and 1,4-butanesultone. These additives may be used singly or in combination of two or more of them. Among them, propanesultone, sulfolane, ethylene sulfide and catechol sulfide are preferred because they are compatible with the aforementioned surface active agent and they have a remarkable effect of reducing the gas generating on the surface of the positive electrode. Propanesultone is particularly preferred.

The amount of at least one additive selected from the group consisting of the carbonic acid ester type additive and the sulfur compound type additive is preferably 0.1 to 10 parts by weight and more preferably 0.5 to 5 parts by weight per 100 parts by weight of the non-aqueous electrolyte. If the amount thereof is less than 0.1 part by weight, a satisfactory effect of suppressing generation of the gas cannot be obtained. On the other hand, if the amount thereof is more than 10 parts by weight, the coating film formed on the electrode becomes too thick, thereby deteriorating the discharge characteristics.

In the case where the carbonic acid ester type additive and the sulfur compound type additive are used at the same time, preferable ratio of the carbonic acid ester type additive to the sulfur compound type additive is 1 : 9 to 9 : 1 from the viewpoint that the effect of both types of additives can be achieved in good balance.

In the case where only the carbonic acid ester type additive is used, the amount thereof is preferably 0.1 to 10 parts by weight and more preferably 0.5 to 5 parts by weight per 100 parts by weight of the non-aqueous electrolyte. When the amount thereof is less than 0.1 part by weight, the effect of decreasing the amount of the gas generating on the negative electrode is impaired; when the amount thereof is more than 10 parts by weight, the coating film formed on the negative electrode becomes too thick, thereby deteriorating the discharge characteristics.

Also, in the case where only sulfur compound type additive is used, the amount thereof is preferably 0.1 to 10 parts by weight and more preferably 0.5 to 5 parts by weight per 100 parts by weight of the non-aqueous electrolyte. When the amount thereof is less than 0.1 part by weight, the effect of decreasing the amount of the gas generating on the positive electrode is impaired; when the amount thereof is more than 10 parts by weight, the coating film formed on the positive electrode becomes too thick, thereby deteriorating the discharge characteristics.

As the positive electrode active material for the non-aqueous electrolyte secondary battery of the present invention, metal oxides containing lithium are preferably used. The metal oxides containing lithium include LiₓCoO₂, LiₓNiO₂, LiₓMnO₂, LiₓCo_{y}Ni_{1-y}O₂, LiₓCo_{f}V_{1-f}O_{z}, LiₓNi_{1-y}M_{y}O₂ (M=Ti, V, Mn, Fe), LiₓOₐNi_{b}M_{c}O₂ (M=Ti, Mn, Al, Mg, Fe, Zr), LiₓMn₂O₄ and LiₓMn_{2-y}M_{y}O₄ (M=Na, Mg, Sc, Y, Fe, Co, Ni, Ti, Zr, Cu, Zn, Al, Pb, Sb). These oxides may be used singly or in combination of two or more of them. Herein, 0≦x≦1.2, 0≦y≦0.9, 0.9≦f≦0.98, 2.0≦z≦2.3, a+b+c=1, 0≦a≦1, 0≦b≦1, and 0≦c<1. The value of x above is a value prior to the start of charging/discharging and it increases or decreases during charging/discharging.

Preferred conductive agents for use in the positive electrode material mixture include a natural graphite such as a flake graphite, an artificial graphite and a carbon black such as acetylene black, ketchen black, channel black, furnace black, lamp black and thermal black. The amount of the conductive agent is not specifically restricted; however, it is preferably 1 to 10% by weight and more preferably 1 to 5% by weight in the positive electrode material mixture comprising a positive electrode active material, the conductive agent and a binder. In the case of graphite and carbon black, 2 to 4% by weight is preferred.

Preferred binder for use in the positive electrode material mixture is a polymer having a thermal decomposition temperature of 300 °C or higher. For example, polyvinylidene fluoride and polytetrafluoroethylene are preferred.

As the positive electrode current collector, electric conductor which does not chemically react with something in the battery is used. For example, preferred is one composed of aluminum or an aluminum alloy and formed into a foil, a net, a lath matter and a porous matter. The thickness of the positive electrode current collector is suitably 1 to 500 µm.

As the negative electrode active material for the non-aqueous electrolyte secondary battery of the present invention, compounds which can absorb and desorb lithium ions are preferred. For example, carbon materials, lithium alloys, intermetallic compounds and organic polymer compounds are preferred. These compounds may be used singly or in combination of two or more of them. Among them, carbon materials are preferable because they are inexpensive and incur little change in the volume.

The carbon materials include a coke, a thermally decomposed carbon, a natural graphite, an artificial graphite, meso-carbon microbeads, graphitized mesophase microbeads, a vapor-phase growth carbon, a glassy carbon, a carbon fiber, an amorphous carbon and a calcined organic matter. These materials may be used singly or in combination of two or more of them. Among them, graphitized mesophase microbeads, a natural graphite and an artificial graphite are preferred.

The average particle size of the carbon material as described above is preferably 0.1 to 60 µm and more preferably 0.5 to 30 µm. Also, the specific surface area thereof is preferably 1 to 10 m²/g. Especially, a graphite having a crystal structure in which the spacing of (002) planes (d₀₀₂) is 3.35 to 3.40 Å, and in which the crystal grain size in the c axis direction (L_{c}) is 100 Å or larger is preferred.

As the conductive agent for use in the negative electrode material mixture, an electric conductor which does not chemically react with something in the battery is used. In the case where a carbon material is used as the negative electrode active material, the conductive agent may not be used.

As the binder in the negative electrode material mixture, a polymer having a thermal decomposition temperature of 150 °C or higher is preferred. For example, styrene-butadiene rubber and polyvinylidene fluoride are preferred.

As the negative electrode current collector, an electric conductor which does not chemically react with something in the battery is used. For example, one composed of copper or a copper alloy and formed into a foil, a net, a lath mater or a porous matter is preferred. Suitable thickness of the negative electrode current collector is 1 to 200 µm.

As the separator, an insulating microporous thin film having a high ionic permeability and a given mechanical strength is preferable. For example, a nonwoven cloth made of an olefin type polymer such as polypropylene and polyethylene or a glass fiber is used because it is hydrophobic and resistant to organic solvents.

The non-aqueous electrolyte secondary battery of the present invention include batteries of coin, button and sheet types, and cylindrical, flat and square shapes and the like.

The non-aqueous electrolyte secondary battery of the present invention will be specifically described below with reference to examples, which, however, are not construed to limit the scope of the invention.

FIG. 1 shows a longitudinal cross sectional view of a cylindrical battery prepared in the following examples. In FIG. 1, numeral 1 denotes a battery case made of a stainless steel, numeral 2 denotes a sealing plate having a safety valve and numeral 3 denotes an insulating packing. In the battery case 1, an electrode assembly is housed. The electrode assembly was prepared by laminating a positive electrode plate 4 and a negative electrode plate 5 with a separator 6 interposed therebetween and rolling up the same together. The positive electrode plate 4 is connected to the sealing plate 2 via a positive electrode lead 7 and the negative electrode plate 5 is connected to the bottom portion of the battery case 1 via the negative electrode lead 8. On top and bottom of the electrode assembly, a top insulating ring 9 and a bottom insulating ring 10 are provided respectively.

The positive electrode plate 4 and the negative electrode plate 5 are respectively prepared in the following manner.

### Positive electrode plate

To 100 parts by weight of a powder of LiCoO₂, 3 parts by weight of acetylene black as a conductive agent and 7 parts by weight of a fluorocarbon polymer as a binder were added to prepare a mixture. This mixture was suspended in an aqueous solution of carboxymethyl cellulose to give a paste of positive electrode material mixture. This paste was applied onto an aluminum foil of 30 µm in thickness, and then it was dried, rolled and cut to give a positive electrode plate. This positive electrode plate had a thickness of 0.18 mm, a width of 37 mm and a length of 390 mm.

### Negative electrode plate

Graphitized mesophase microbeads prepared by graphitizing carbonized meso-carbon microbeads at a high temperature of 2800 °C (hereafter, this is referred to as mesophase graphite) was used. A mixture composed of 100 parts by weight of mesophase graphite and 5 parts by weight of styrene-butadiene rubber as a binder was prepared. This mixture was suspended in an aqueous solution of carboxymethyl cellulose to give a paste of negative electrode material mixture. This paste was applied onto both surfaces of a copper foil of 20 µm in thickness, and then it was dried, rolled and cut to give a negative electrode plate. This negative electrode plate had a thickness of 0.20 mm, a width of 39 mm and a length of 420 mm.

A positive electrode lead made of aluminum was connected to the positive electrode plate and a negative electrode lead made of nickel was connected to the negative electrode plate. Then, the positive electrode plate and the negative electrode plate were laminated with a separator made of polypropylene interposed therebetween, and they were rolled up together to give an electrode assembly. The separater used had a thickness of 25 µm, a width of 45 mm and a length of 950 mm. This electrode assembly was housed in a battery case of 17.0 mm in diameter and 50.0 mm in height. Thereafter, a given non-aqueous electrolyte, a surface active agent and an additive were put in the battery case to complete the battery.

The non-aqueous electrolyte was prepared by dissolving 1 mol/l of LiPF₆ in a mixed solvent containing ethylene carbonate and ethylmethyl carbonate at a volume ratio of 1 : 3.

### Example 1

To 100 parts by weight of the non-aqueous electrolyte as above, a surface active agent represented by the general formula (4):

F-C₈F₁₆-SO₂-N(C₃H₇)-(CH₂-CH₂)₂₀-SO₃Li

was added in the amount as shown in Table 1. Then, using the non-aqueous electrolytes containing given amounts of the surface active agent, batteries 1 to 11 were constructed. Hence, the battery 1 contains no surface active agent of the general formula (4).

Next, 5 pieces of each of the batteries 1 to 11 were prepared. Each battery was subjected to constant-voltage charging for 2 hours at 20 °C under 4.2 V and a maximum current of 500 mA. Subsequently, each battery was discharged at current of 0.2 C and 1.0 C. Then, the ratio of the discharge capacity obtained during discharging at 1.0 C to the discharge capacity obtained during discharging at 0.2 C (1.0 C/0.2 C ratio) was determined as rate characteristics. The results as an average value of 5 pieces are shown in Table 1. The values of 1.0 C/0.2 C ratio in Table 1 are relative values when the value of 1.0 C/0.2 C ratio of the battery 1 is taken as 100. Greater is the value of 1.0 C/0.2 C ratio, more excellent is the high rate discharging property of the battery.

**Table 1**

| No. | A* | Rate characteristics (1.0/0.2C ratio) | b** |
|---|---|---|---|
| 1 | 0 | 100 | 100 |
| 2 | 0.0005 | 100 | 95 |
| 3 | 0.001 | 102 | 88 |
| 4 | 0.005 | 103 | 80 |
| 5 | 0.01 | 105 | 73 |
| 6 | 0.05 | 108 | 55 |
| 7 | 0.1 | 110 | 50 |
| 8 | 0.5 | 105 | 53 |
| 9 | 1.0 | 102 | 69 |
| 10 | 5.0 | 100 | 88 |
| 11 | 10.0 | 95 | 98 |

| | | | |
|---|---|---|---|
| *; amount of the surface active agent (part(s) by weight) | | | |
| **; amount of the gas inside the battery after the storage | | | |

Next, the batteries in the charged condition were stored in a constant-temperature bath at 85 °C for 3 days. Then, the amount of the gas inside the batteries after the storage was examined. The results as an average value of 5 pieces are shown in Table 1. The value of gas amount in Table 1 is a relative value when the gas amount of the battery 1 is taken as 100.

From Table 1, it is found that the rate characteristics of the batteries 2 to 11 with the surface active agent added thereto are remarkably superior to that of the battery 1 with no surface active agent added. Also, it is understood that the gas amounts after storage of the batteries 2 to 11 containing the surface active agent are substantially smaller than that of the battery 1. Further, it is found that, when the amount of the surface active agent is less than 0.001 part by weight per 100 parts by weight of the non-aqueous electrolyte, the effect of adding the surface active agent is small; when the amount thereof is more than 5 parts by weight, the rate characteristics are impaired.

It is considered that these results are attributed to the effect of allowing the non-aqueous electrolyte to permeate sufficiently into the electrodes, which effect is proved by the surface active agent of the general formula (4). By this effect, it is regarded that the interfacial free energy between the non-aqueous electrolyte and the electrodes is decreased to enable lithium ions to readily diffuse in the interface. Also, the decrease in the gas amount indicates that the addition of the surface active agent made the electrode reaction uniform.

### Example 2

To 100 parts by weight of the non-aqueous electrolyte, 0.1 part by weight of the surface active agent of the general formula (4) was added, and further, 2 parts by weight of the carbonic acid ester type additive as shown in Table 2 were added. Then, using the non-aqueous electrolyte containing the surface active agent of the general formula (4) and the given carbonic acid ester type additive, batteries 13 to 24 were constructed. Hence, battery 12 contains only the surface active agent and no carbonic acid ester type additive.

Also, to 100 parts by weight of the non-aqueous electrolyte with no surface active agent added, only 2 parts by weight of the carbonic acid ester type additive as shown in Table 3 was added. Then, using the non-aqueous electrolyte containing only the given carbonic acid ester type additive, batteries 13' to 24' were constructed. Hence, battery 12' contains neither surface active agent nor carbonic acid ester type additive.

Next, 5 pieces of each of the batteries 12 to 24 and 12' to 24' were prepared. Each battery was subjected to constant-voltage charging for 2 hours at 20°C under, 4.2 V and a maximum current of 500 mA, and the amount of gas generated was examined. The results as an average value of 5 pieces are shown in Tables 2 and 3. The values of the gas amount in Tables 2 and 3 are relative values when the gas amount of the battery 12' is taken as 100.

**Table 2**

| With surface active agent | | |
|---|---|---|
| No. | additive | c*** |
| 12 | None | 98 |
| 13 | vinylene carbonate | 70 |
| 14 | phenylethylene carbonate | 84 |
| 15 | phenylvinylene carbonate | 79 |
| 16 | Diphenylvinylene carbonate | 88 |
| 17 | trifluoropropylene carbonate | 90 |
| 18 | chloroethylene carbonate | 80 |
| 19 | Methoxypropylene carbonate | 88 |
| 20 | vinylethylene carbonate | 83 |
| 21 | catechol carbonate | 85 |
| 22 | Tetrahydrofuran carbonate | 93 |
| 23 | diphenyl carbonate | 82 |
| 24 | diethyl dicarbonate | 87 |

| | | |
|---|---|---|
| ***; amount of the gas inside the battery generated during charging | | |

**Table 3**

| Without surface active agent | | |
|---|---|---|
| No. | additive | c*** |
| 12' | None | 100 |
| 13' | vinylene carbonate | 78 |
| 14' | phenylethylene carbonate | 88 |
| 15' | phenylvinylene carbonate | 85 |
| 16' | Diphenylvinylene carbonate | 93 |
| 17' | trifluoropropylene carbonate | 95 |
| 18' | chloroethylene carbonate | 84 |
| 19' | Methoxypropylene carbonate | 96 |
| 20' | Vinylethylene carbonate | 89 |
| 21' | catechol carbonate | 92 |
| 22' | Tetrahydrofuran carbonate | 97 |
| 23' | diphenyl carbonate | 87 |
| 24' | diethyl dicarbonate | 91 |

| | | |
|---|---|---|
| ***; amount of the gas inside the battery generated during charging | | |

Principal components of the gas were hydrogen, methane, carbon dioxide and the like, which generate when the non-aqueous solvent decomposes. In view of the battery characteristics and the productivity, smaller amount of gas is preferred.

In Tables 2 and 3, the gas amounts of the batteries 13 to 24 containing the carbonic acid ester type additive are explicitly smaller than that of the battery 12 containing no carbonic acid ester type additive. This is presumably because the carbonic acid ester type additive was spread uniformly on the surface of the negative electrode by the effect of the surface active agent, thereby suppressing the generation of the gas in the negative electrode.

### Example 3

To 100 parts by weight of the non-aqueous electrolyte, 0.1 part by weight of the surface active agent of the general formula (4) was added, and further, 2 parts by weight of the sulfur compound type additive as shown in Table 4 were added thereto. Then, using the non-aqueous electrolyte containing the surface active agent of the general formula (4) and the given sulfur compound type additive, batteries 26 to 35 were constructed. Hence, battery 25 contains only the surface active agent and no sulfur compound type additive.

Also, to 100 parts by weight of the non-aqueous electrolyte with no surface active agent added, only 2 parts by weight of the sulfur compound type additive as shown in Table 5 were added. Then, using the non-aqueous electrolyte containing only the given sulfur compound type additive, batteries 26' to 35' were constructed. Hence, battery 25' contains neither surface active agent nor sulfur compound type additive.

Next, 5 pieces of each of the batteries 25 to 35 and 25' to 35' were prepared. Each battery was subjected to constant-voltage charging for 2 hours at 20 °C under, 4.2 V and a maximum current of 500 mA, and subsequently the batteries were stored in a constant-temperature bath at 85 °C for three days. Then, the amount of gas inside the battery after storage was examined. The results as an average value of 5 pieces are shown in Tables 4 and 5. The values of the gas amount in Tables 4 and 5 are relative values when the gas amount of the battery 25' is taken as 100.

**Table 4**

| With surface active agent | | |
|---|---|---|
| No. | additive | b** |
| 25 | None | 50 |
| 26 | ethylene sulfide | 38 |
| 27 | ethylene trithiocarbonate | 42 |
| 28 | vinylene trithiocarbonate | 41 |
| 29 | catechol sulfide | 38 |
| 30 | tetrahydrofuran sulfide | 41 |
| 31 | sulfolane | 36 |
| 32 | 3-methylsulfolane | 41 |
| 33 | sulfolene | 38 |
| 34 | propanesultone | 32 |
| 35 | 1,4-butanesultone | 41 |

| | | |
|---|---|---|
| **; amount of the gas inside the battery after the storage | | |

**Table 5**

| Without surface active agent | | |
|---|---|---|
| No. | additive | b** |
| 25' | None | 100 |
| 26' | ethylene sulfide | 89 |
| 27' | ethylene trithiocarbonate | 90 |
| 28' | vinylene trithiocarbonate | 85 |
| 29' | catechol sulfide | 78 |
| 30' | tetrahydrofuran sulfide | 83 |
| 31' | sulfolane | 75 |
| 32' | 3-methylsulfolane | 96 |
| 33' | sulfolene | 80 |
| 34' | propanesultone | 72 |
| 35' | 1,4-butanesultone | 87 |

| | | |
|---|---|---|
| **; amount of the gas inside the battery after the storage | | |

In table 4, the gas amount of the batteries 26 to 35 containing the sulfur compound type additives is explicitly decreased than that of the battery 25 containing no sulfur compound type additive. This is presumably because the sulfur compound type additive was spread uniformly on the surface of the positive electrode by the effect of the surface active agent, thereby suppressing the generation of the gas on the positive electrode.

### Example 4

Using ethylene carbonate, propylene carbonate and γ-butyrolactone, the non-aqueous solvents in compositions as shown in Table 6 were prepared. Further, to the given non-aqueous solvent, a given amount of vinylene carbonate and/or propanesultone as an additive was added. Using the solvents as above, batteries 36, 38, 40, 42 and 44 were constructed.

Also, batteries 37, 39, 41, 43 and 45 were constructed in the same manner as the batteries 36, 38, 40, 42 and 44, respectively, except that 0.1 part by weight of the surface active agent of the general formula (4) was added thereto per 100 parts by weight of the non-aqueous solvent or the sum of the non-aqueous solvent and the additive.

Next, in the same manner as in Example 1, the value of 1.0 C/0.2 C ratio was determined. The results as an average value of 5 pieces are shown in Table 6. In Table 6, the values of 1.0 C/0.2 C ratio of the batteries 37, 39, 41, 43 and 45 are respectively relative values when the values of the batteries 36, 38, 40, 42 and 44 are taken as 100.

Next, a cycle of charging the batteries for 2 hours at 20 °C under 4.2 V and a maximum current of 500 mA and discharging the same at a current of 1.0 C was repeated. Then, the ratio of discharge capacity at 100th cycle to discharge capacity at 1st cycle was determined as capacity maintenance rate. The results as an average value of 5 pieces are shown in Table 6. The values of the capacity maintenance rate of batteries 37, 39, 41, 43 and 45 in Table 6 are relative values when the capacity maintenance rates of batteries 36, 38, 40, 42 and 44 are taken as 100, respectively.

**Table 6**

| No. | A* | Composition of solvent | | | | | Rate characteristics (1.0C/0.2C ratio) | d**** |
|---|---|---|---|---|---|---|---|---|
| | | EC | PC | GBL | VC | PS | | |
| 36 | 0 | 40 | | 60 | | | 100 | 100 |
| 37 | 0.1 | 40 | | 60 | | | 107 | 110 |
| 38 | 0 | 35 | 55 | 10 | | | 100 | 100 |
| 39 | 0.1 | 35 | 55 | 10 | | | 112 | 115 |
| 40 | 0 | 50 | 50 | | | | 100 | 100 |
| 41 | 0.1 | 50 | 50 | | | | 118 | 119 |
| 42 | 0 | | | 95 | 5 | | 100 | 100 |
| 43 | 0.1 | | | 95 | 5 | | 122 | 128 |
| 44 | 0 | | | 94 | 2 | 4 | 100 | 100 |
| 45 | 0.1 | | | 94 | 2 | 4 | 127 | 132 |

| | | | | | | | | |
|---|---|---|---|---|---|---|---|---|
| *; amount of the surface active agent (part(s) by weight) | | | | | | | | |
| ****; capacity maintenance rate at 100th cycle | | | | | | | | |

EC: ethylene carbonate
PC: propylene carbonate
GBL: *γ*-butyrolactone
VC: vinylene carbonate
PS: propanesultone

In Table 6, the rate characteristics and the capacity maintenance rates of the batteries 37, 39, 41, 43 and 45 are superior to those of the batteries 36, 38, 40, 42 and 44 containing no surface active agent.

Herein, the dielectric constants of propylene carbonate, γ-butyrolactone and ethylene carbonate are 64.9, 39.1 and 89.1, respectively. In general, a non-aqueous electrolyte comprising a solvent having such a large dielectric constant has the problem that it does not readily permeate into the electrodes and the separator.

The results in Table 6 indicate that the addition of the surface active agent of the general formula (4) can improve such a problem. Therefore, according to the present invention, a non-aqueous electrolyte secondary battery exhibiting excellent electric characteristics can be obtained even when a solvent having a large dielectric constant is used.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A non-aqueous electrolyte secondary battery comprising a positive electrode; a negative electrode; and a non-aqueous electrolyte comprising a non-aqueous solvent and a solute dissolved therein,
wherein said non-aqueous electrolyte is added with a surface active agent represented by the general formula (1):
X-CₙF₂ₙ-Y-(CH₂-CH₂)ₘ-Z
where X is H or F, Y is -CONH- or -SO₂NR- in which R is an alkyl group, Z is -OH, -CH₃, -PO₃W₂ or -SO₃W in which W is an alkali metal, 4≦n≦10, and 20≦m≦100.

2. The non-aqueous electrolyte secondary battery in accordance with claim 1,
wherein the amount of said surface active agent is 0.001 to 5.0 parts by weight per 100 parts by weight of said non-aqueous electrolyte.

3. The non-aqueous electrolyte secondary battery in accordance with claim 1,
wherein said positive electrode comprises a metal oxide containing lithium, said negative electrode comprises a carbon material, and said non-aqueous solvent comprises at least one selected from the group consisting of ethylene carbonate, propylene carbonate, ethylmethyl carbonate, diethyl carbonate, dimethyl carbonate, γ-butyrolactone, γ-valerolactone, α-acetyl-γ-butyrolactone, α-methyl-*γ*-butyrolactone, methyl acetate, ethyl acetate, methyl propionate, ethyl butylate, butyl acetate, n-propyl acetate, iso-butyl propionate and benzyl acetate.

4. The non-aqueous electrolyte secondary battery in accordance with claim 1,
wherein 80% by volume or more of said non-aqueous solvent consists of at least one selected from the group consisting of propylene carbonate and *γ*-butyrolactone.

5. The non-aqueous electrolyte secondary battery in accordance with claim 1,
wherein 0.1 to 10 parts by weight of at least one selected from the group consisting of a carbonic acid ester type additive and a sulfur compound type additive is added to said non-aqueous electrolyte per 100 parts by weight of said non-aqueous electrolyte.

6. The non-aqueous electrolyte secondary battery in accordance with claim 1,
wherein said carbonic acid ester type additive is at least one selected from the group consisting of vinylene carbonate, phenylethylene carbonate, phenylvinylene carbonate, diphenylvinylene carbonate, trifluoropropylene carbonate, chloroethylene carbonate, methoxypropylene carbonate, vinylethylene carbonate, catechol carbonate, tetrahydrofuran carbonate, diphenyl carbonate and diethyl dicarbonate.

7. The non-aqueous electrolyte secondary battery in accordance with claim 1,
wherein said sulfur compound type additive is at least one selected from the group consisting of ethylene sulfide, ethylene trithiocarbonate, vinylene trithiocarbonate, catechol sulfide, tetrahydrofuran sulfide, sulfolane, 3-methylsulfolane, sulfolene, propanesultone and 1,4-butanesultone.
